(19) Europäisches Patentamt
European Patent Office
Office européen des brevets

(11) **EP 2 283 401 B1**

(12) **EUROPEAN PATENT SPECIFICATION**

(45) Date of publication and mention
of the grant of the patent:
**04.03.2015  Bulletin 2015/10**

(51) Int Cl.:
***G01N 21/21*** *(2006.01)*   ***G01J 4/00*** *(2006.01)*

(21) Application number: **08874227.5**

(22) Date of filing: **20.11.2008**

(86) International application number:
**PCT/US2008/012931**

(87) International publication number:
**WO 2009/136901 (12.11.2009 Gazette 2009/46)**

(54) **A combination of a sample investigation system (ES) and alignment system (AS) and a method of aligning a sample in a sample investigation system**

Eine Kombination von einem Probenuntersuchungssystem (ES) und einem Ausrichtungssystem (AS) und ein Verfahren zum Ausrichten einer Probe in einem Probenuntersuchungssystem

Une combinaison d'un système d'examen de l'échantillon (ES) et un système d'alignement (AS) et un procédé d'alignement d'un échantillon dans un système d'examen de l'échantillon

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.05.2008   US 127062 P**

(43) Date of publication of application:
**16.02.2011   Bulletin 2011/07**

(73) Proprietor: **J.A. WOOLLAM CO. INC.**
**Lincoln NE 68508 (US)**

(72) Inventors:
 • **HE, Ping**
 **Nebraska (US)**
 • **HALE, Jeffrey, S.**
 **Lincoln**
 **NE 68521 (US)**
 • **PFEIFFER, Galen, L.**
 **Lincoln**
 **NE 68521 (US)**
 • **LIPHARDT, Martin, M.**
 **Lincoln**
 **NE 68523 (US)**

(74) Representative: **Beck Greener**
**Fulwood House**
**12 Fulwood Place**
**London WC1V 6HR (GB)**

(56) References cited:
**US-B1- 6 982 792    US-B1- 7 084 978**
**US-B1- 7 136 162    US-B1- 7 136 172**
**US-B1- 7 277 171    US-B1- 7 333 198**
**US-B1- 7 336 361**

## Description

<u>TECHNICAL AREA</u>

The present invention relates to the practice of ellipsometry, polarimetry, reflectometry and spectrophotometry; and more particularly to a sample investigation system and method of enabling very fast sample height, angle-of-incidence and plane-of-incidence adjustments, with application in a sample mapping or the like systems.

<u>BACKGROUND</u>

Ellipsometry is a well known approach to determining physical and optical properties of samples. To obtain accurate results, however, requires that values for certain adjustable parameters, including the distance between the ellipsometer and the sample under investigation, (eg. the "height" of the sample), and the angle-of-incidence and plane-of-incidence of the ellipsometer beam with respect to the sample, be known. Where a single point on a sample is to be investigated, .alignment procedures are well established which provide the required values within acceptable time constraints, (eg. many seconds to a minute or so). However, in situations wherein many points on a large sample, (eg. a mapping of the sample is to be performed), the time required to do conventional alignments at each of the many point investigated can introduce unacceptable, (eg. 5 seconds each), time delays in achieving desired results. The present invention provides a combination sample investigation system (ES) and alignment system, and method of its use, which enables very fast, (eg. on the order a second or two), setting of sample height, and angle, and plane-of-incidence, at each spot on the sample to be investigated. The present invention also discloses a relevant sample mapping system which applies the alignment system.

As further insight, it is noted that Pending US Patent Application Serial 11/890,391 Filed 08/05/2007 provides priority back to Application No. 11/105,852, Filed 04/14/2005, with Priority back to 04/23/2004 via Provisional Application Serial No. 60/564,747, and describes a substantially self contained flying ellipsometer, polarimeter, reflectometer or spectrophotometer system that provides for moving a combined source and detector of electromagnetic radiation over the a surface of a sample in two, (eg. "X" and "Y"), orthogonal dimensions to enable positioning it at desired locations on, and offset distance from sample in a "Z" dimension corresponding to a distance between said combined source and detector and said sample, and which enables easy sequential setting of different Angles-of-Incidence of a beam of electromagnetic radiation to a surface of said sample.

As related in the 391 Pending Application, Ellipsometer Systems generally include a source of a beam of electromagnetic radiation, a Polarizer, which serves to impose a known, (typically linear), state of polarization on a beam of electromagnetic radiation, a Stage for supporting a sample, and an Analyzer which serves to select a polarization state in a beam of electromagnetic radiation after it has interacted with a material system, and pass it to a Detector System for analysis therein. As well, one or more Compensator(s) can be present and serve to affect a phase retardance between orthogonal components of a polarized beam of electromagnetic radiation. A number of types of ellipsometer systems exist, such as those which include rotating elements and those which include modulation elements. Those including rotating elements include Rotating Polarizer (RP), Rotating Analyzer (RA) and Rotating Compensator (RC). A preferred embodiment is a Rotating Compensator Ellipsometer System because they do not demonstrate "Dead-Spots" where obtaining ellipsometric data is difficult. They can read PSI and DELTA of a Material System over a full Range of Degrees with the only limitation being that if PSI becomes essentially zero (0.0), one can't then determine DELTA as there is not sufficient PSI Polar Vector Length to form the angle between the PSI Vector and an "X" axis. In comparison, Rotating Analyzer and Rotating Polarizer Ellipsometers have "Dead Spots" at DELTA's near 0.0 or 180 Degrees and Modulation Element Ellipsometers also have a "Dead Spot" at PSI near 45 Degrees). The utility of Rotating Compensator Ellipsometer Systems should then be apparent. Another benefit provided by Rotating Compensator Ellipsometer Systems is that the Polarizer (P) and Analyzer (A) positions are fixed, and that provides benefit in that polarization state sensitivity to input and output optics during data acquisition is essentially non-existent. This enables relatively easy use of optic fibers, mirrors, lenses etc. for input/output.

Typical construction of spectrophotometer, reflectometer, polarimeter, ellipsometer and the like systems, (eg. Rotating Analyzer, Rotating Polarizer, Rotating Compensator, Modulator Element Ellipsometer), provides a Sample Supporting Stage which is substantially fixed in location. Functionally oriented with respect thereto are a Substantially Fixed Position Source Means (S) for providing a beam of electromagnetic radiation at an oblique angle to said Sample Supporting Stage, and a Substantially Fixed Position Data Detector Means (D) for intercepting Electromagnetic Radiation which Reflects (or Transmits through), a Sample placed on said Sample Supporting Stage. Typical procedure is to place a Sample onto the Sample Supporting Stage, cause a beam of Electromagnetic Radiation to impinge thereonto, and record data produced by the Data Detector Means in response to electromagnetic radiation which enters thereinto, which data is analyzed to provide insight into Sample Optical and Physical properties. Said procedure can include adjustment of the Sample Supporting Stage, or the source and detector of electromagnetic radiation in an "X"-"Y" Plane, and along a "Z" direction perpendicular to its surface, (ie. a vertical position adjustment where the Electromagnetic Radiation approaches the Sample at an oblique angle from a laterally located Source). This purpose of said "Z" adjustment is, for instance, to enable the directing of a beam of Electromagnetic Radiation Reflected from a Sample placed on said Sample Supporting Stage into the Data Detector without moving the Data Detector so it intercepts a beam exiting said Sample. It should be appreciated then that conventional Reflectometer, Ellipsometer and Polarimeter Systems which include provision for such Sample positioning adjustment and orientation with respect to an impinging Electromagnetic beam, typically do so by allowing the Sample Supporting Stage position to be adjusted, rather than by effecting simultaneous change in location of the Source and Data Detector with respect to the Sample Supporting Stage, because it is far simpler to implement Sample Supporting Stage location change. However, an alternative is mount a Reflectometer, Spectrophotometer, Ellipsometer, Polarimeter or the like System to a means for moving it in an "X"-"Y" Plane, and along a "Z" direction perpendicular to its surface of the Sample with respect to a substantially fixed position Stage for supporting a Sample. In either case, however, a relative motion occurs between the Reflectometer, Ellipsometer, Polarimeter or the like System and a sample.

US 7,084,978 B1 (Fig. 6) discloses a system and method in which a beam of radiation (EI) obliquely impinges on a monitored location of a surface of a sample (S), on a stage (STG) translatable in "X", "Y" and "Z" directions and rotatable about "X", "Y" and "Z" axes. Above stage (STG) is a first beam splitter means (BS1), a zoom lens (L1) and a first camera means (CCD1) for providing a view of a portion of the surface of said sample (S), said first beam splitter (BS1) means having positioned on a lower surface thereof LEDs for providing light to the surface of said sample (S). Reflection means (RM), second beam splitter (BS2), second camera means (CCD2), lens (L2) and a point source of radiation from optical fiber (OF) receiving radiation from source (BBS) are also provided. First (CCD1) and second (CCD2) camera means each have a corresponding display means (M1) and (M2).

The system further comprises an ellipsometric polarization state generator (PSG) i.e. a polarised light source and a polarization stage detector (PSD) to monitor a beam (EI) of radiation after it has impinged on said monitored location on said surface of said sample at an oblique angle thereto. First camera means (CCD1) and M1 provide a view of the surface of a sample (S) using light from LEDs positioned on the lower surface of first beam splitter (BS1). The point source of radiation provides, via second beam splitter (BS2), reflective means (RM) and first beam splitter (BS1), a vertically incident interrogating beam (IB) to the sample which after retro-reflection and transmission at BS2 forms a point image on detector CCD2. If the imaged point is centrally positioned the monitored location on the sample (S) surface is oriented so as to face substantially vertically.

The surface of sample (S) is aligned to ensure that the beam of radiation (EI) provided to said monitored location on the surface of said sample (S) at an oblique angle approaches said surface at a known intended angle of incidence thereto at the exact point of impingement, rather than at an angle of incidence which is modified by surface irregularities. A polarizer means (P) is provided to enable changing the direction of imposed polarization e.g. if it is determined desirable to allow some of said interrogation beam to reach the first camera means (CCD1), (e.g. where it is found to aid with sample surface alignment).

The present invention then breaks with conventional practice by, while typically providing a substantially fixed position Stage for supporting a Sample, providing a Reflectometer, Spectrophotometer, Ellipsometer, Polarimeter or the like System which is mounted to a positioning system which allows adjustment its location in an "X"-"Y" Plane, and along a "Z" direction perpendicular to its surface of the Sample. The present invention then, allows investigation of a large Sample at many locations thereof.

Continuing, while present invention systems can be applied in any material system investigation system such as Polarimeter, Reflectometer, Spectrophotometer and the like Systems, an important application is in Ellipsometer Systems, whether monochromatic or spectroscopic. It should therefore be understood that Ellipsometry involves acquisition of sample system characterizing data at single or multiple Wavelengths, and at one or more Angle(s)-of-Incidence (AOI) of a Beam of Electromagnetic Radiation to a surface of the sample system.

A typical goal in ellipsometry is to obtain, for each wavelength in, and angle of incidence of said beam of electromagnetic radiation caused to interact with a sample system, sample system characterizing PSI and DELTA values, (where PSI is related to a change in a ratio of magnitudes of orthogonal components $r_p/r_s$ in said beam of electromagnetic radiation, and wherein DELTA is related to a phase shift entered between said orthogonal components $r_p$ and $r_s$, caused by interaction with said sample system:

$$TAN(\psi)\, e^{(i\Delta)} = r_p/r_s$$

While Data taken at one (AOI) and one or multiple wavelengths is often sufficient to allow ellipsometric characterization of a sample system, the results of Ellipsometric Investigation can be greatly enhanced by using multiple (AOI's) to obtain additional data sets. However, while it is relatively easy to provide Wavelength change without extensive difficult physical Ellipsometer System Orientation change, it is typically difficult to change the Angle-of-Incidence (AOI) that a Beam of Electromagnetic Radiation makes to a surface of a sample system. An (AOI) change requires that both the Source of the Electromagnetic Beam and the Detector must be re-positioned and aligned, and such is tedious and time consuming. The present invention therefore can provide means to easily effect (AOI) change. It is also noted that ellipsometric data is typically analyzed by proposing a mathematical model for the sample and regressing it on to said ellipsometric data to arrive at values for parameters in the mathematical model which meet, for instance, a best fit based on a least square error criteria. Further, it is known to obtain data from multiple similar samples and simultaneously regress the similar models onto the different ellipsometric data sets. This technique can break correlation between thickness and refractive index, where the samples have different thicknesses. A similar approach can be applied to data acquired from multiple spots on a single sample.

A Patent to Finarov, No. US 5,764,365 is disclosed as it describes a system for moving an ellipsometer beam over a large two-dimensional area on the surface of a sample system, which system utilizes beam deflectors.

A Patent to Berger et al., No. US 5,343,293 describes an Ellipsometer which comprises prisms to direct an electromagnetic beam onto a sample system.

A Patent to Canino, No. US 4,672,196 describes a system which allows rotating a sample system to control the angle of incidence of a beam of electromagnetic radiation thereonto. Multiple detectors are present to receive the resulting reflected beams.

A Patent to Bjork et al., No. US 4,647,207 describes an ellipsometer system in which reflecting elements are moved into the path of a beam of electromagnetic radiation.

Patent No. US 6,081,334 to Grimbergen et al. describes a system for detecting semiconductor end point etching including a means for scanning a beam across the surface of a substrate.

A Patent to Ray, No. US 5,410,409 describes a system for scanning a laser beam across a sample surface.

Patent No. US 3,874,797 to Kasai describes means for directing a beam of electromagnetic radiation onto the surface of a sample using totally internally reflecting prisms.

Patent No. US 5,412,473 to Rosencwaig et al., describes a ellipsometer system which simultaneously provides an electromagnetic beam at a sample surface at numerous angles of incidence thereto.

A Patent to Chen et al., No. US 5,581,350 is identified as it describes the application of regression in calibration of ellipsometer systems.

A Search of Patents which contain both "ellipsometer" and "Mapping" provided Patents Nos.:

     US RE40,225 to Finarov;
     US RE38,153 to Finarov;
     US 6,678,043 to Vurens;
     US 7,099,010 to schulz;
     US 7,295,330 to Chow;
     US 7,327,444 to Naka et al.

An article by Johs, titled "Regression Calibration Method For Rotating Element Ellipsometers", which appeared in Thin Film Solids, Vol. 234 in 1993 is also identified as it predates the Chen et al. Patent and describes an essentially similar approach to ellipsometer calibration.

Even in view of the prior art, need remains for:

an ellipsometer system which enables very fast, (eg. on the order a second or two), setting of sample height, and angle, and plane-of-incidence, at each spot on the sample to be investigated and a sample mapping system which applies the alignment system; and

an ellipsometer system which is functionally mounted in a three dimension location means for positioning said selected system at points in a three dimensional setting, including rotational capability.

DISCLOSURE OF THE INVENTION

The present invention comprises a method of aligning a sample in a sample investigation system (ES) such as an ellipsometer system.

The present invention also comprises a combination sample investigation system (ES) and alignment system (AS).

Said ellipsometer system can comprise at least one compensator and/or focusing means between said source of a beam of electromagnetic radiation and said data detector.

In use a beam of electromagnetic radiation from said source thereof approaches said sample at an oblique angle-of-incidence and reflects therefrom into said data detector.

Said system optionally can comprise at least one polarizer, analyzer, compensator or focusing means between said source of a sample investigation beam of electromagnetic radiation and said data detector.

In use a beam of electromagnetic radiation from said source thereof approaches said sample at an oblique angle-of-incidence and reflects therefrom into said data detector.

Said method also comprises the steps of:

a) functionally mounting a sample alignment system to said ellipsometer system, which sample alignment system comprises:

an alignment source of an alignment beam of electromagnetic radiation;

a first alignment beam focusing means for focusing an alignment beam of electromagnetic radiation provided from said source thereof onto a sample on said ellipsometer system stage for supporting a sample;

a second alignment focusing means for focusing alignment beam electromagnetic radiation which reflects from said sample onto a two dimensional detector array; and

said two dimensional detector array,

such that in use an alignment beam of electromagnetic radiation from said source thereof is focused onto said sample at an oblique angle-of-incidence and reflects therefrom and is focused onto said two dimensional detector array.

Present invention methodology of investigating a sample can further comprise analyzing ellipsometric data acquired from said data detector in step f, and that analysis can involve the acquiring of ellipsometric data involves repeating steps b - f at least twice to obtain ellipsometric data from at least two spots on said sample, and in which the analysis comprises simultaneous regression onto data obtained from said at least two spots on said sample.

The foregoing methods can then involve performing at least one selection from the group consisting of:

storing at least some data provided by said data detector in machine readable media;

analyzing at least some of the data provided by said data detector and storing at least some of the results of said analysis in machine readable media;

displaying at least some data provided by said data detector by electronic and/or non-electronic means;

analyzing at least some of the data provided by said data detector and displaying at least some of the results of said analysis by electronic and/or non-electronic means;

causing at least some data provided by said data detector to produce a signal which is applied to provide a concrete and tangible result;

analyzing at least some of the data provided by said data detector and causing at least some thereof to produce a signal which is applied to provide a concrete and tangible result.

While the foregoing discussed the very relevant application of an exemplary ellipsometer system, the Claims should be broadly considered to involve any material system investigation system, such as:

an ellipsometer;
a polarimeter;
a reflectometer;
a spectrophotometer; and
a Mueller Matrix measuring system.

Said system optionally can comprise at least one polarizer, analyzer, compensator or focusing means between said source of a sample investigation beam of electromagnetic radiation and said data detector.

In use a sample investigation beam of electromagnetic radiation from said source thereof approaches said sample at an oblique angle-of-incidence and reflects therefrom into said data detector.

Said combination sample investigation system and alignment system can further comprise:

a mounting frame which supports said combination sample investigation system, and alignment system, said mounting frame projecting vertically upward from a horizontally oriented support as viewed in elevation, and having affixed thereto said means for adjusting the relative "height" positioning between said stage for supporting a sample and, as a unit, said source of a beam of electromagnetic radiation and data detector, as well as said means for translating relative positioning of said sample with respect to said source of a beam of electromagnetic radiation and said data detector, along two orthogonal axes, and said optional means for adjusting the relative orientation of the ellipsometer with respect to said sample to set the angle and plane of incidence of said beam with respect to a surface of said sample; and in which said stage for supporting a sample is oriented to secure a sample in a plane slightly offset from said vertically upward projected plane of said mounting frame so that a sample entered thereinto does not tend to fall back out thereof, said stage being of a construction to contact the edges of the sample only.

Further, said combination sample investigation system and alignment system can further comprise:

a plurality of clamp means at the edges of said stage whereat the sample contacts said stage and which secure the sample to the stage at said edges thereof to better secure said sample, and to decrease non-planar warping therein.

The disclosed invention will be better understood by reference to the Detailed Description section of this Disclosure, in combination with the Drawings.

BRIEF DESCRIPTION OF THE DRAWINGS

Fig. 1 shows a combination ellipsometer (ES) and alignment (AS) system.

Fig. 2a shows that a basic alignment system (AS).

Fig. 2b is included to show that beam components reflected from the front (F), and back (B), respectively, sides of the sample (SAM) can form two spots on the two dimensional detector array (SCRN1).

Fig. 3a shows a preferred sample alignment system (AS) which includes a beam splitter (BS) and a second two dimensional detector array (SCRN2).

Fig. 3b demonstrates that the (AOI) and (POI) of an ellipsometric beam (EB) can be adjusted with respect to a surface of said sample (SAM/STG) by rotation.

Fig. 3c shows that adjusting the height (H) between the sample (SAM) and the alignment system (AS), causes a movement of a spot (HA) on two dimensional detector array (SCRN1).

Fig. 3d shows that a relative tip/tilt between the sample (SAM) and the alignment system (AS) causes a spot (TTA) on the secondary two dimensional detector array (SCRN2) to move vertically with (AOI) and horizontally with (POI).

Figs. 4a - 4c functionally show that the combination ellipsometer (ES) and alignment (AS) system just described can be commonly mounted to a mounting frame (MF) to form a sample mapping system.

Figs. 4d - 4f show a mounting frame (MF), stage (STG) and sample (SAM).

DETAILED DESCRIPTION

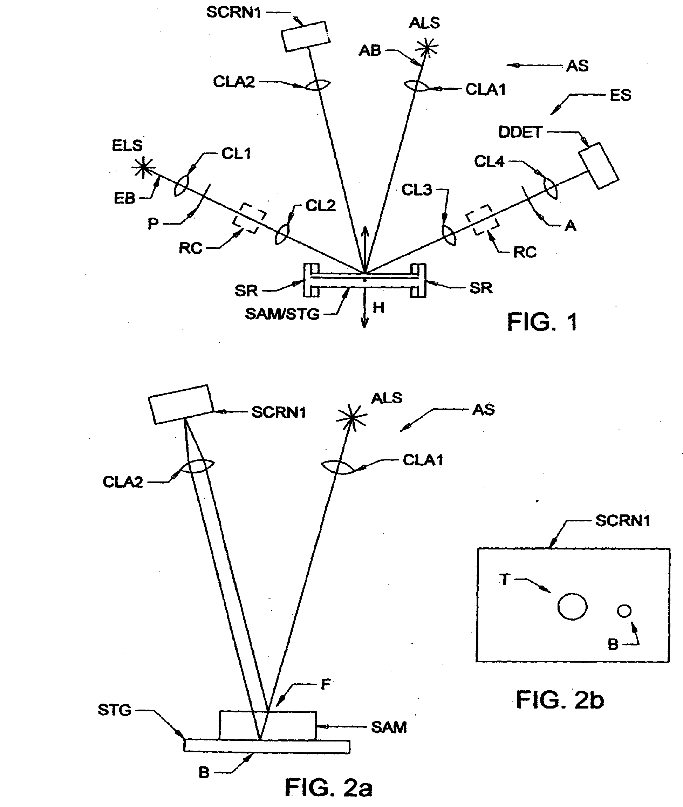

Turning now to the Drawings, Fig. 1 shows a combination ellipsometer (ES) and alignment (AS) system. The ellipsometer system (ES) is demonstrated as comprising:

a source of a beam of electromagnetic radiation (ELS);

a polarizer (P);

a stage for supporting a sample (SAM/STG);

an analyzer (A);

a data detector (DDET); and

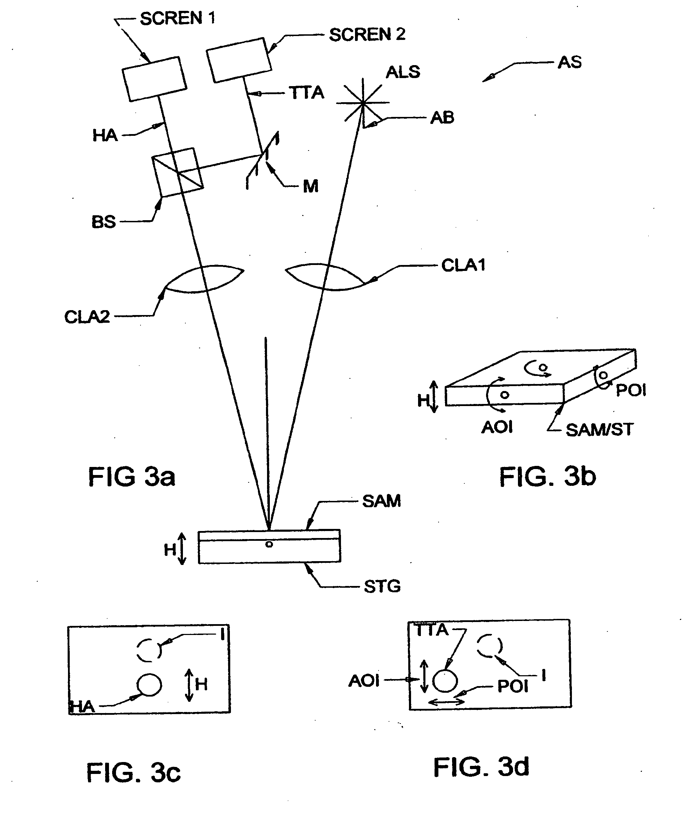

means for adjusting the relative "height" (H) positioning between said stage for supporting a sample (SAM/STG) and, as a unit, said source (ELS) of an ellipsometer beam (EB) of electromagnetic radiation and data detector (DDET); as well as means for translating relative positioning of said sample (SAM/STG) with respect to, as a unit, said source (ELS) of an ellipsometer beam (EB) of electromagnetic radiation and said data detector, along two orthogonal axes; and optionally means for adjusting the relative orientation of the ellipsometer with respect to said sample (SAM/STG) to set the angle (AOI) and plane (POI) of incidence, (see Fig. 3b), of said ellipsometer beam (EB) with respect to a surface of said sample (SAM/STG).

Said ellipsometer system is shown to optionally comprise at least one compensator ((RC) and/or focusing means (CL1) (CL2) (CL3) CL4) between said source (ELS) of a beam (EB) of electromagnetic radiation and said data detector (DDET). In use an ellipsometer beam (EB) of electromagnetic radiation from said source (WLS) thereof approaches said sample (SAM/STG) at an oblique angle-of-incidence and reflects therefrom into said data detector (DDET) which produces analyzable data.

Fig. 2a shows that a basic alignment system (AS) comprises:

an alignment source (ALS) of an alignment beam (AB) of electromagnetic radiation;

a first alignment beam (AB) focusing means (CLA1) for focusing an alignment beam (AB) of electromagnetic radiation provided from said source thereof onto the sample (SAM/STG) on said ellipsometer system stage (STG) for supporting a sample (SAM);

a second alignment focusing means (CLA2) for focusing alignment beam electromagnetic radiation which reflects from said sample (SAM) onto a two dimensional detector array (SCRN1); and

said two dimensional detector array (SCRN1).

In use an alignment beam (AB) of electromagnetic radiation from said alignment source (ALS) thereof is focused onto said sample (SAM) at an oblique angle-of-incidence and reflects therefrom and is focused onto said two dimensional detector array (SCRN1).

Fig. 2b is included to show that beam components reflected from the front (F), and back (B), respectively, sides of the sample (SAM) can form two spots on the two dimensional detector array (SCRN1). The distance between said spots is related to the thickness of the sample (SAM).

Fig. 3a shows that said sample alignment system (AS) preferably further comprises:

between said second alignment focusing means (CLA2) and said two dimensional detector array (SCRN1) a beam splitter (BS) which diverts a portion of the alignment beam (AB) electromagnetic radiation which reflects from said sample (SAM) to a secondary two dimensional detector array (SCRN2).

Said ellipsometer (ES) and alignment (AS) systems are mounted with respect to one another such that the ellipsometer beam (EB) of electromagnetic radiation and said alignment beam (AB) of electromagnetic radiation impinge on said sample (SAM) at substantially the same location thereupon. Fig. 3b serves to show that the sample (SAM) and stage (STG) might be rotated about orthogonal axes to set (AOI) and POI) of the alignment beam (AB). This should be interpreted to indicate that a functionally equivalent rotational capability can, perhaps alternatively, be provided to the alignment system (AS) and that is relative rotations between the sample (SAM) and alignment system (AL) which is important in the present invention.

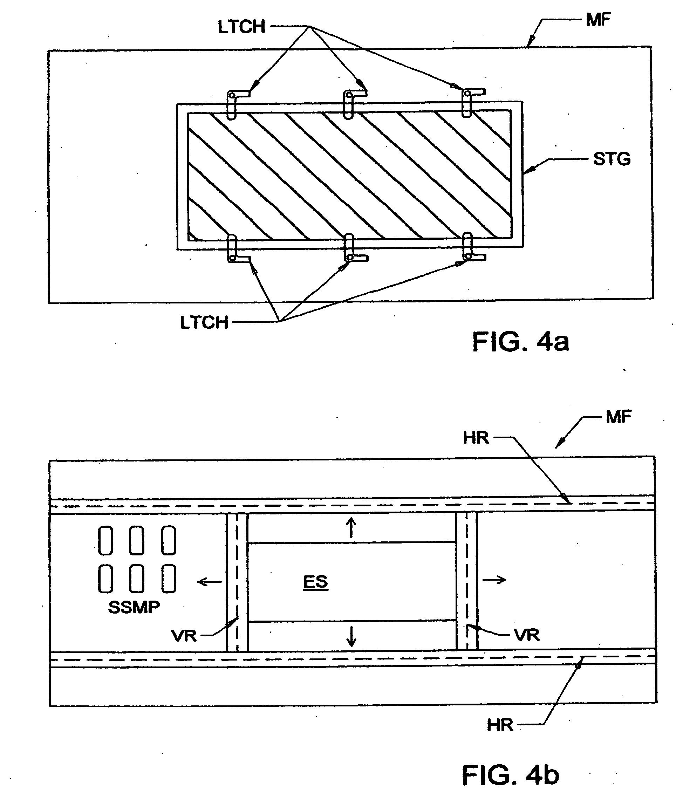

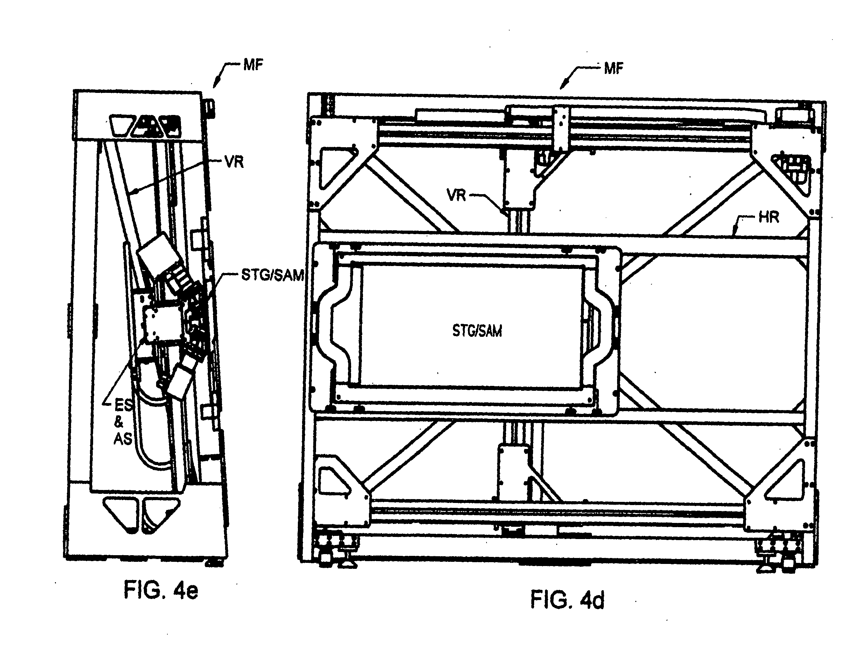

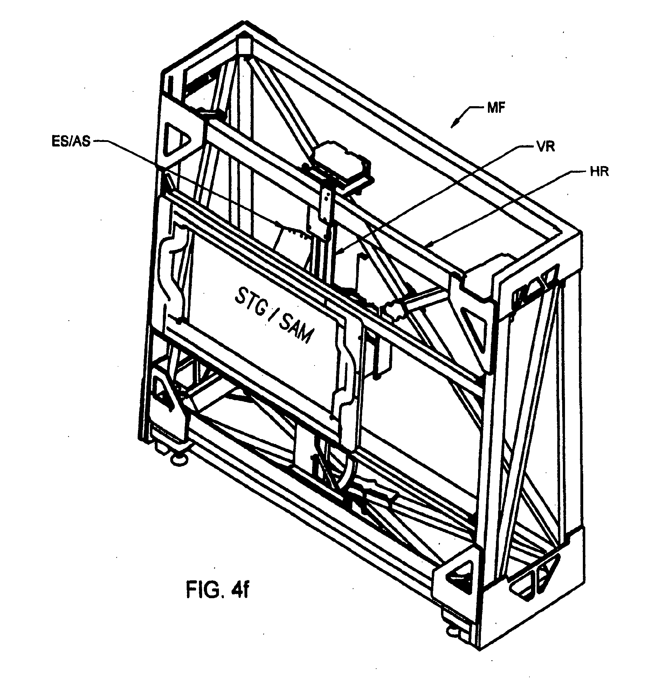

Fig. 3c shows that adjusting the height (H) between the sample (SAM) and the alignment system (AS), causes a movement of a spot (HA) on two dimensional detector array (SCRN1). Fig. 3d shows that a relative tip/tilt between the sample (SAM) and the alignment system (AS) causes a spot (TTA) on the secondary two dimensional detector array (SCRN2) to move vertically with (AOI) and horizontally with (POI). Said Figs. 3c and 3d actually provide specific insight to how the present invention is able to adjust height (H) and (AOI) and (POI) very quickly. Relative height (H) translation and relative (AOI) and (POI) rotations between the stage (STG), (note the stage (STG) is fixed in the Figs. 4a - 4c), and the alignment system (AS) can be performed to position the spots (HA) and (TTA) on two dimensional detector arrays (SCRN1) and (SCRN2) at positions thereon identified as "ideal" (I) therein. The methodology for accomplishing this is described in the Disclosure of the Invention Section of the Disclosure.

Continuing, Figs. 4a - 4c functionally show that the combination ellipsometer (ES) and alignment (AS) system just described can further comprise:

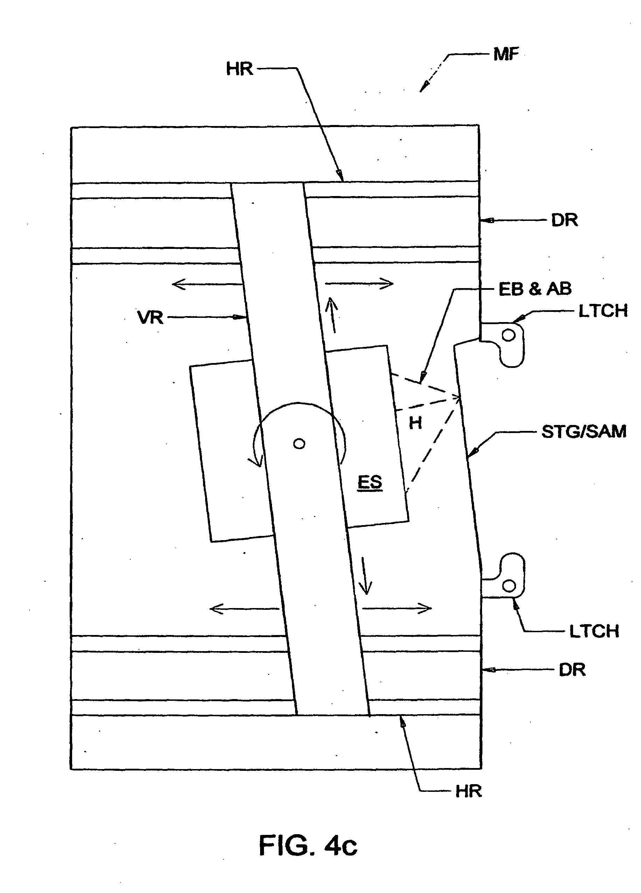

a mounting frame (MF) which supports said combination ellipsometer (ES) and alignment (AL) system, said mounting frame (MF) projecting vertically upward from a horizontally oriented support as viewed in elevation. Fig. 4c indicates the presence of means for adjusting the relative "height" (H) positioning between said stage (STG) for supporting a sample (SAM) and, as a unit, said source of a beam of electromagnetic radiation and data detector (collectively indicated by (ES)). A well, said means for translating (HR) (DR) relative positioning of said sample with respect to said source of a beam of electromagnetic radiation and said data detector, along two orthogonal axes. Said optional means for adjustng the relative orientation of the ellipsometer, (indicated by circular arrows), with respect to said sample to set the angle and plane of incidence of said ellipsometric beam with respect to a surface of said sample (SAM).

Further, Fig. 4c shows that said stage (STG) for supporting a sample (SAM) is oriented to secure a sample (SAM) in a plane slightly offset from said vertically upward projected plane of said mounting frame (MF) so that a sample (SAM) entered thereinto does not tend to fall back out thereof, said stage (STG) being of a construction to contact the edges of the sample only, (see Fig. 4a). Also note that a plurality of "clamp means" (LTCH) at the edges of said stage (STG) in Figs. 4a and 4c, whereat the sample (SAM) contacts said stage (STG). Said clamp means secure the sample (SAM) to the stage (STG) at said edges thereof to better secure said sample (SAM), and to decrease non-planar warping therein. It is noted that sample (SAM) investigated in the present invention can be on the order of a meter or so long along a side and as such can be expected to demonstrate a non-planar surface.

In view of Figs 4a - 4c, the present disclosure can be recast as a sample (SAM) mapping system comprising a mounting frame (MF) which supports a combination ellipsometer (ES) and alignment (AS) system, said mounting frame (MF) projecting substantially vertically upward from a substantially horizontally oriented support, as viewed in elevation, and where said combination ellipsometer (ES) and alignment (AS) system are described above. Also note that Fig. 4b shows the ellipsometer system (ES) can be moved horizontally via a sliding action in guides (HR) or vertically by a sliding action in guides (VR). Fig. 4c indicates guides (DR) allow forward and backward motion which can be applied to adjust (H), (eg. the "height" between the sample (SAM) and the combination (ES). Fig. 4c allows shows that the sample (SAM) is not oriented vertically, but rather is mounted in a fixed position at a slight off-vertical orientation. This is to better secure the sample (SAM). However, achieving that benefit requires that the combination (ES) be rotatable to provide (AOI) and (POI) adjustment capability as shown.

It is noted that Fig. 4b also shows Standard Samples (SSMP) mounted at a location whereat the Ellipsometer system (ES) can cause an incident beam to impinge thereupon. In use, the Ellipsometer system (E) can be positioned to "investigate" a Standard Sample (SSMP) which has known physical and/or optical properties, and the data obtained from the Data Detector (DDET) while the Ellipsometer system (ES) is so positioned can be used to calibrate the Ellipsometer system (ES) via a regression procedure. This callibration approach is described in Patent to Johs et al. No. 5,872,630 and basically evaluates parameters in a mathematical model which describe Ellipsometer system (ES) components, in the same way Sample (SAM) parameters are evaluated.

Figs. 4d - 4f show a mounting frame (MF), stage (STG) and sample (SAM), also showing guides (HR) and (VR) and the location at which the combination ellipsometer (ES) and alignment (AS) system is mounted in the mounting frame (MF), as were functionally indicated in Figs. 4a - 4c.

It is also noted that the alignment and secondary alignment screens (SCRN1) (SCRN2) can double as means to provide an image of the sample, when an illumination source is added to the alignment system (AS), (not shown). When that is done, as described in Pending Application, Serial No. 11/784,750, a relatively large area of the sample surface can be viewed in focus if the relative tilt between the sample (SAM) and the alignment system (AS) is set to meet the Scheimpflug condition. The 750 Application is included by reference herein.

While the foregoing discussed the very relevant application of an ellipsometer system, the Claims should be broadly considered to include any material system investigation systems such as:

ellipsometer;
polarimeter;
reflectometer;
spectrophotometer; and
Mueller Matrix measuring system;

which operate at at least one wavelength in at least one wavelength range, such as:

VUV;
UV;
Visible;
Infrared;
Far Infrared;
Radio Wave.

The major difference between an ellipsometer, polarimeter and Mueller Matrix measuring system as compared to a reflectometer or spectrophotometer is that the reflectometer or spectrophotometer does not comprise polarization related elements such as a polarizer (P) and analyzer (A).

Finally, it is noted that the two dimensional detector array (SCRN1) and secondary two dimensional detector array (SCRN2) can be CDD or CMOS Camera etc.

Having hereby disclosed the subject matter of the present invention, it should be obvious that many modifications, substitutions, and variations of the present invention are possible in view of the teachings. It is therefore to be understood that the invention may be practiced other than as specifically described, and should be limited in its breadth and scope only by the Claims.

**Claims**

1. A method of aligning a sample in a sample investigation system (ES) selected from the group consisting of an ellipsometer; a polarimeter; a reflectometer; a spectrophotometer; and a Mueller Matrix measuring system;

   the investigation system (ES) comprising a source (ELS) of a sample investigation beam of electromagnetic radiation; a stage (STG) for supporting a sample (SAM); a data detector (DDET); and means for adjusting the relative "height" (H) positioning between the stage (STG) and, as a unit, the source (ELS) of the sample investigation beam and the data detector (DDET); and means for translating relative positioning of the sample (SAM) with respect to the source of the sample investigation beam and the data detector (DDET), along two orthogonal axes, and means for adjusting the relative orientation of the investigation system (ELS) with respect to the sample to set the angle and plane of incidence of the sample investigation beam with respect to a surface of said sample (SAM);

   such that in use the sample investigation beam from the source (ELS) approaches the sample (SAM) at an oblique angle-of-incidence and reflects therefrom into said data detector (DDET);

   the method comprising the steps of:

   functionally mounting a sample alignment system (AS) to said sample investigation system (ES), the sample alignment system (AS) comprising an alignment source (ALS) of an alignment beam of electromagnetic radiation; a first alignment beam focusing means (CLA1) for focusing the alignment beam from said source (ALS) onto the sample (SAM) on the stage (STG); a second alignment focusing means (CLA2) for focusing alignment beam electromagnetic radiation reflected from the sample (SAM); and a two dimensional detector array (SCRN1);

   such that in use the alignment beam from the alignment source (ALS) is focused onto the sample (SAM) at an oblique angle-of-incidence and reflects therefrom and is focused onto the two dimensional detector array (SCRN1);

   the sample investigation system (ES) and the alignment system (AS) being mounted with respect to one another such that the sample investigation beam and the alignment beam impinge on the sample (SAM) at substantially the same location;

   said method further comprising:

   while monitoring output intensity from the data detector (DDET) causing a sample investigation beam from the source (ELS) to approach the sample (SAM) at an oblique angle-of-incidence and to reflect therefrom into said data detector (DDET), adjusting the means for adjusting the relative "height" positioning until output from said data detector (DDET) is of a desirable intensity; and causing the alignment beam from the source (ALS) to approach the sample (SAM) at an oblique angle-of-incidence and to reflect therefrom onto the two dimensional detector array (SCRN1) and identifying the location on the two dimensional detector array (SCRN1) as an aligned position; and the method further comprising:

using the means for translating relative positioning of the sample (SAM) to cause relative translation of the sample (SAM) along at least one orthogonal axis so that a new spot on the sample (SAM) is investigated by the sample investigation beam, and such that the location at which the alignment beam is reflected from the sample (SAM) surface appears on the two dimensional detector array (SCRN1) at a different location from the aligned position;
adjusting the means for adjusting the relative "height" positioning until the alignment beam reflected from said sample (SAM) surface appears on the two dimensional detector array (SCRN1) at the aligned position;
with the above adjustment set, acquiring data from the data detector (DDET) and
repeating the steps of relatively translating the sample (SAM), adjusting the relative "height" positioning until the alignment beam is in the aligned position; and acquiring data from the data detector (DDET);
the method being **characterised in that** the sample alignment system (AS) further comprises a beam splitter (BS) between the second alignment focusing means (CLA2) and the two dimensional detector array (SCRN1), and a secondary two dimensional detector array (SCRN2), the beam splitter (BS) diverting a portion of the alignment beam which reflects from the sample (SAM) to the secondary two dimensional detector array (SCRN2);
and **in that** the method further comprises:

while causing a sample investigation beam from the source (ELS) to approach the sample at an oblique angle-of-incidence and to reflect therefrom into the data detector (DDET), monitoring the output from the data detector (DDET), and adjusting the means for adjusting the relative orientation of the sample investigation system (ES) with respect to said sample (SAM) to rotate the sample investigation system to set the angle and plane of incidence of the sample investigation system (ES) beam with respect to the surface of the sample (SAM) until the intensity of the data detector (DDET) output is maximized and such that the alignment beam is reflected from the sample (SAM) and, via the beam splitter (BS), appears on the secondary two dimensional detector array (SCRN2), and
identifying the location on said secondary two dimensional detector array (SCRN2) as an aligned position;
after moving the sample investigation system along at least one orthogonal axis such that a new spot on the sample (SAM) is investigated,
adjusting the position of the sample investigation system to set the angle and plane of incidence of said beam with respect to a surface of said sample (SAM) until the alignment beam reflected from the surface of the sample (SAM) appears on the two dimensional detector array (SCRN2) at said aligned position.

2. A method as claimed in Claim 1, in which the source (ELS) of a beam of electromagnetic is a spectroscopic source.

3. A method as claimed in Claim 1, further comprising analyzing the data acquired from the data detector (DDET).

4. A method as claimed in Claim 3, in which the acquiring of data involves repeating steps at least twice to obtain data from at least two spots on the sample (SAM), and in which the analysis comprises simultaneous regression on data obtained from the at least two spots on the sample (SAM).

5. A method as claimed in Claim 1, further comprising the step of calibrating the system by evaluating parameters in a mathematical model of the system using a regression procedure on data obtained from said data detector (DDET) while investigating at least one standard sample, having known physical and/or optical properties.

6. A method as claimed in Claim 1, in which the sample investigation system (ES) includes a polarizer (P) between the source (ELS) of the sample investigation beam and the sample (SAM), and an analyzer (A) between the sample (SAM) and the data detector (DDET), and in which the system is an ellipsometer or polarimeter.

7. A combination sample investigation system (ES) and alignment system (AS) comprising a sample investigation system selected from the group consisting of an ellipsometer; a polarimeter; a reflectometer; a spectrophotometer; and a Mueller Matrix measuring system;
the investigation system comprising a source (ELS) of a sample investigation beam of electromagnetic radiation; a stage (STG) for supporting a sample (SAM); a data detector (DDET); and means for adjusting the relative "height" (H) positioning between the stage (STG) and, as a unit, the source (ELS) of the sample investigation beam and the data detector (DDET); and means for translating relative positioning of the sample (SAM) with respect to the source (ELS) of the sample investigation beam and the data detector (DDET), along two orthogonal axes, and means for adjusting the relative orientation of the sample investigation system (ES) with respect to the sample (SAM) to set the angle and plane of incidence of the sample investigation beam with respect to a surface of said sample (SAM);
such that in use the sample investigation beam from the source (ELS) approaches the sample (SAM) at an oblique angle-of-incidence and reflects therefrom into said data detector (DDET); and
an alignment system (AS) comprising an alignment source (ALS) of an alignment beam of electromagnetic radiation; a first alignment beam focusing means (CLA1) for focusing the alignment beam from said source (ALS) onto the sample (SAM) on the stage (STG); a second alignment focusing means (CLA2) for focusing alignment beam electromagnetic radiation reflected from the sample; and a two dimensional detector array (SCRN1);
such that in use the alignment beam from the alignment source (ALS) is focused onto the sample (SAM) at an oblique angle-of-incidence and reflects therefrom and is focused onto the two dimensional detector array (SCRN1);
the sample investigation system (ES) and the alignment system (AS) being mounted with respect to one another such that the sample investigation beam and the alignment beam impinge on the sample (SAM) at substantially the same location;
wherein the said sample alignment system (AS) further comprises a beam splitter (BS) between said second alignment focusing means (CLA2) and the two dimensional detector array (SCRN1), and a secondary two dimensional detector array (SCRN2), the beam splitter (BS) diverting a portion of the alignment beam which reflects from the sample (SAM) to the secondary two dimensional detector array (SCRN2).

8. A combination sample investigation system (ES) and alignment system (AS) as claimed in claim 7, the system further comprising:

   a mounting frame (MF) which supports said combination sample investigation system (ES), and alignment system (AS), said mounting frame (MF) projecting vertically upward from a horizontally oriented support as viewed in elevation, wherein the combination sample investigation system (ES) is movable both horizontally and vertically relative to the mounting frame (MF) along two orthogonal axes, and is also movable in a third direction to adjust the 'height' between the stage (STG) and the combination sample investigation system (ES) to set the angle and plane of incidence of the beam with respect to the surface of the sample (SAM) which is mounted in a fixed position.

9. A combination sample investigation system (ES) and alignment system (AS) as claimed in Claim 8, wherein the stage (STG) for supporting the sample (SAM) is oriented to secure the sample (SAM) in a plane slightly offset from the vertically upward projected plane of the mounting frame (MF) so that the sample (SAM) entered thereinto does not tend to fall back out thereof, the stage (STG) being of a construction to contact only the edges of the sample (SAM).

**Patentansprüche**

1. Ein Verfahren für die Justierung einer Probe in einem Probenuntersuchungssystem (ES), welches aus der Gruppe ausgewählt wird, die Folgendes umfasst: ein Ellipsometer; ein Polarimeter; ein Reflektometer; ein Spektralfotometer; und ein Müller-Matrix-Messsystem;
wobei das Untersuchungssystem (ES) Folgendes umfasst: eine Quelle (ELS) eines Probenuntersuchungsstrahls von einer elektromagnetischen Strahlung; ein Gestell (STG) für die Unterstützung einer Probe (SAM); ein Datendetektor (DDET); und Mittel für die Anpassung der Position der relativen "Höhe" (H) zwischen dem Gestell (STG) und, als Einheit, der Quelle (ELS) des Probenuntersuchungsstrahls und dem Datendetektor (DDET); sowie Mittel für die Übertragung der relativen Positionierung der Probe (SAM) in Bezug auf die Quelle des Probenuntersuchungsstrahls und den Datendetektor (DDET) entlang zweier orthogonaler Achsen sowie Mittel für die Anpassung der relativen Ausrichtung des Untersuchungssystems (ELS) in Hinblick auf die Probe für die Festlegung des Einfallswinkels und der Einfallsebene des Probenuntersuchungsstrahls in Bezug auf eine Oberfläche der besagten Probe (SAM); sodass sich der Probenuntersuchungsstrahl von der Quelle (ELS) bei der Nutzung in einem schrägen Einfallswinkel hin zur Probe (SAM) bewegt und von dort aus in den besagten Datendetektor (DDET) reflektiert;
wobei das Verfahren folgende Schritte umfasst:

funktionelle Montage eines Probenjustierungssystems (AS) am besagten Probenuntersuchungssystem (ES), wobei das Probenjustierungssystem (AS) aus Folgendem besteht: einer Justierungsquelle (ALS) eines Justierungsstrahls von einer elektromagnetischen Strahlung; einem ersten Mittel zur Fokussierung des Justierungsstrahls (CLA1) für die Fokussierung des Justierungsstrahls von der besagten Quelle (ALS) auf die Probe (SAM) auf dem Gestell (STG); einem zweiten Mittel zur Fokussierung des Justierungsstrahls (CLA2) für die Fokussierung der von der Probe (SAM) reflektierten elektromagnetischen Strahlung des Justierungsstrahls; und einem zweidimensionalen Detektor-Array (SCRN1);
sodass der Justierungsstrahl von der Justierungsquelle (ALS) bei der Nutzung in einem schrägen Einfallswinkel auf die Probe (SAM) fokussiert wird und von dort aus reflektiert und auf das zweidimensionale Detektor-Array (SCRN1) fokussiert wird;
wobei das Probenuntersuchungssystem (ES) und das Justierungssystem (AS) zueinander montiert werden, sodass der Probenuntersuchungsstrahl und der Justierungsstrahl im Wesentlichen an derselben Stelle auf die Probe (SAM) auftreffen;
wobei das besagte Verfahren ferner Folgendes umfasst:

während der Überwachung der Ausgabeintensität vom Datendetektor (DDET) die Bewirkung, dass sich ein Probenuntersuchungsstrahl von der Quelle (ELS) in einem schrägen Einfallswinkel hin zur Probe (SAM) bewegt und von dort aus in den besagten Datendetektor (DDET) reflektiert, wobei die Mittel für die Anpassung der Positionierung der relativen "Höhe" verstellt werden, bis die Ausgabe vom besagten Datendetektor (DDET) die gewünschte Intensität erreicht hat; und
die Bewirkung, dass sich der Justierungsstrahl von der Quelle (ALS) in einem schrägen Einfallswinkel hin zur Probe (SAM) bewegt und von dort aus auf das zweidimensionale Detektor-Array (SCRN1) reflektiert sowie die Identifizierung der Stelle auf dem zweidimensionalen Detektor-Array (SCRN1) als eine justierte Position;
wobei das Verfahren ferner auch Folgendes umfasst:

Nutzung der Mittel für die Übertragung der relativen Positionierung der Probe (SAM) für die Bewirkung einer relativen Übertragung der Probe (SAM) entlang mindestens einer orthogonalen Achsen, sodass eine neue Stelle auf der Probe (SAM) vom Probenuntersuchungsstrahl untersucht wird und sodass die Stelle, an welcher der Justierungsstrahl von der Oberfläche der Probe (SAM) reflektiert wird, auf dem zweidimensionalen Detektor-Array (SCRN1) an einer Stelle erscheint, die von der justierten Position abweicht;
Anpassung der Mittel zur Anpassung der Positionierung der relativen "Höhe", bis der Justierungsstrahl, welcher von der Oberfläche der besagten Probe (SAM) reflektiert wird, auf dem zweidimensionalen Detektor-Array (SCRN1) in der angepassten Position erscheint;
Sammlung von Daten vom Datendetektor (DDET), wenn die vorstehend genannte Justierung eingestellt ist, und Wiederholung der Schritte der relativen Übertragung der Probe (SAM), Anpassung der Positionierung der relativen "Höhe", bis der Justierungsstrahl sich in der justierten Position befindet; und Sammlung von Daten vom Datendetektor (DDET);
wobei das Verfahren **dadurch gekennzeichnet ist, dass** das Probenjustierungssystem (AS) des Weiteren einen Strahlteiler (BS) zwischen dem zweiten Mittel zur Fokussierung der Justierung (CLA2) und dem zweidimensionalen Detektor-Array (SCRN1) sowie ein sekundäres zweidimensionales Detektor-Array (SCRN2) umfasst, wobei der Strahlteiler (BS) einen Teil des Justierungsstrahls ablenkt, der sich von der Probe (SAM) auf das sekundäre zweidimensionale Detektor-Array (SCRN2) reflektiert; und wobei das Verfahren ferner Folgendes umfasst:

die Überwachung der Ausgabe vom Datendetektor (DDET), während bewirkt wird, dass sich ein Probenuntersuchungsstrahl von der Quelle (ELS) in einem schrägen Einfallswinkel zur Probe bewegt und von dort aus in den Datendetektor (DDET) reflektiert, und die Anpassung der Mittel für die Anpassung der relativen Ausrichtung des Probenuntersuchungssystems (ES) in Bezug auf die besagte Probe (SAM) zum Rotieren des Probenuntersuchungssystems für die Einstellung des Einfallswinkels und der Einfallsebene des Strahls des Probenuntersuchungssystems (ES) zur Oberfläche der Probe (SAM), bis die Intensität der Ausgabe des Datendetektors (DDET) maximiert wird und sodass der Justierungsstrahl von der Probe (SAM) reflektiert wird und über den Strahlteiler (BS) auf dem sekundären zweidimensionalen Detektor-Array (SCRN2) erscheint; sowie die Identifizierung der Stelle auf dem besagten sekundären zweidimensionalen Detektor-Array (SCRN2) als eine justierte Position; nachdem das Probenuntersuchungssystem entlang mindestens einer orthogonalen Achse bewegt wurde, sodass eine neue Stelle auf der Probe (SAM) untersucht wird, die Anpassung der Position des Probenuntersuchungssystems zur Einstellung des Einfallswinkels und der Einfallsebene des besagten Strahls zu einer Oberfläche der besagten Probe (SAM), bis der Justierungsstrahl, der von der Oberfläche der Probe (SAM) reflektiert wird, in der besagten justierten Position auf dem zweidimensionalen Detektor-Array (SCRN2) erscheint.

2. Ein Verfahren gemäß Anspruch 1, wobei die Quelle (ELS) eines Strahls einer elektromagnetischen Strahlung eine spektroskopische Quelle ist.

3. Ein Verfahren gemäß Anspruch 1, wobei dieses des Weiteren eine Analyse der Daten, welche vom Datendetektor (DDET) gesammelt werden, umfasst.

4. Ein Verfahren gemäß Anspruch 3, wobei die Sammlung von Daten die mindestens zweimalige Wiederholung der Schritte umfasst, um Daten von mindestens zwei Stellen auf der Probe (SAM) zu erhalten, und wobei die Analyse die simultane Regression von Daten, welche von den mindestens zwei Stellen auf der Probe (SAM) erfasst wurden, umfasst.

5. Ein Verfahren gemäß Anspruch 1, wobei dieses des Weiteren den Schritt der Kalibrierung des Systems durch Bewertung von Parametern in einem mathematischen Modell des Systems anhand eines Regressionsverfahrens der vom besagten Datendetektor (DDET) erhaltenen Daten umfasst, während mindestens eine standardmäßige Probe untersucht wird, die bekannte physikalische oder optische Eigenschaften aufweist.

6. Ein Verfahren gemäß Anspruch 1, bei dem das Probenuntersuchungssystem (ES) einen Polarisator (P) zwischen der Quelle (ELS) des Probenuntersuchungsstrahls und der Probe (SAM) sowie einen Analysator (A) zwischen der Probe (SAM) und dem Datendetektor (DDET) umfasst, und bei dem das System ein Ellipsometer oder ein Polarimeter ist.

7. Ein kombiniertes Probenuntersuchungssystem (ES) und Justierungssystem (AS), welches ein Probenuntersuchungssystem umfasst, das aus der Gruppe ausgewählt wurde, die aus Folgendem besteht: einem Ellipsometer; einem Polarimeter; einem Reflektometer, einem Spektralfotometer; sowie einem Müller-Matrix-Messsystem; wobei das Untersuchungssystem Folgendes umfasst: eine Quelle (ELS) eines Probenuntersuchungsstrahls von einer elektromagnetischen Strahlung; ein Gestell (STG) für die Unterstützung einer Probe (SAM); ein Datendetektor (DDET); sowie Mittel für die Anpassung der Positionierung der relativen "Höhe" (H) zwischen dem Gestell (STG) und, als Einheit, der Quelle (ELS) des Probenuntersuchungsstrahls und dem Datendetektor (DDET); sowie Mittel für die Übertragung der relativen Positionierung der Probe (SAM) zur Quelle (ELS) des Probenuntersuchungsstrahls und zum Datendetektor (DDET) entlang zweier orthogonaler Achsen und Mittel für die Anpassung der relativen Ausrichtung des Probenuntersuchungssystems (ES) zur Probe (SAM) für die Einstellung des Einfallswinkels und der Einfallsebene des Probenuntersuchungsstrahls zu einer Oberfläche der besagten Probe (SAM); sodass sich der Probenuntersuchungsstrahl von der Quelle (ELS) bei der Nutzung in einem schrägen Einfallswinkel zur Probe (SAM) bewegt und von dort aus in den besagten Datendetektor (DDET) reflektiert; und

ein Justierungssystem (AS), welches Folgendes umfasst: eine Justierungsquelle (ALS) eines Justierungsstrahls von einer elektromagnetischen Strahlung; ein erstes Mittel zur Fokussierung des Justierungsstrahls (CLA1) für die Fokussierung des Justierungsstrahls von der besagten Quelle (ALS) auf die Probe (SAM) auf dem Gestell (STG); ein zweites Mittel zur Fokussierung der Justierung (CLA2) für die Fokussierung der elektromagnetischen Strahlung des Justierungsstrahls, welche von der Probe reflektiert wird; sowie ein zweidimensionales Detektor-Array (SCRN1);

sodass der Justierungsstrahl von der Justierungsquelle (ALS) bei der Nutzung in einem schrägen Einfallswinkel auf die Probe (SAM) fokussiert wird und von dort aus reflektiert und auf das zweidimensionale Detektor-Array (SCRN1) fokussiert wird;

wobei das Probenuntersuchungssystem (ES) und das Justierungssystem (AS) zu einander montiert werden, sodass der Probenuntersuchungsstrahl und

der Justierungsstrahl im Wesentlichen an derselben Stelle auf die Probe (SAM) auftreffen;

wobei das besagte Probenjustierungssystem (AS) ferner einen Strahlteiler (BS) zwischen dem besagten zweiten Mittel zur Fokussierung der Justierung (CLA2) und dem zweidimensionalen Detektor-Array (SCRN1) sowie ein sekundäres zweidimensionales Detektor-Array (SCRN2) aufweist, wobei der Strahlteiler (BS) einen Teil des Justierungsstrahls ablenkt, der von der Probe (SAM) auf das sekundäre zweidimensionale Detektor-Array (SCRN2) reflektiert.

8. Eine kombiniertes Probenuntersuchungssystem (ES) und Justierungssystem (AS) gemäß Anspruch 7, wobei das System ferner Folgendes umfasst:

   einen Montagerahmen (MF), der das besagte kombinierte Probenuntersuchungssystem (ES) und Justierungssystem (AS) trägt, wobei der besagte Montagerahmen (MF) aus einem horizontal ausgerichteten Träger vertikal nach oben herausragt, wie im Aufriss dargestellt, wobei sich das kombinierte Probenuntersuchungssystem (ES) sowohl horizontal als auch vertikal relativ zum Montagerahmen (MF) entlang zweier orthogonaler Achsen bewegen lässt und sich ferner auch in eine dritte Richtung bewegen lässt, um die "Höhe" zwischen dem Gestell (STG) und dem kombinierten Probenuntersuchungssystem (ES) anzupassen, um wiederum den Einfallswinkel und die Einfallsebene des Strahls zur Oberfläche der Probe (SAM), welche in einer festen Position montiert ist, einzustellen.

9. Ein kombiniertes Probenuntersuchungssystem (ES) und Justierungssystem (AS) gemäß Anspruch 8, wobei das Gestell (STG) für die Unterstützung der Probe (SAM) so ausgerichtet ist, dass es die Probe (SAM) in einer Ebene befestigt, die gegenüber der vertikal aufwärts ragenden Ebene des Montagerahmens (MF) leicht versetzt ist, sodass die darin eingefügte Probe (SAM) nicht heraus fallen kann, wobei das Gestell (STG) eine Konstruktion ist, die nur die Ränder der Probe (SAM) berührt.

## Revendications

1. Une méthode d'alignement d'un échantillon dans un système d'examen d'échantillon (ES) sélectionné dans le groupe composé d'un ellipsomètre, d'un polarimètre, d'un réflectomètre, d'un spectrophotomètre, et d'un système de mesure Mueller Matrix ;
   le système d'examen d'échantillon (ES) comprend une source (ELS) d'un faisceau d'examen d'échantillon au rayonnement électromagnétique ; un palier (STG) supportant un échantillon (SAM) ; un détecteur de données (DDET) ; et un dispositif pour ajuster le positionnement à « hauteur » (H) relative entre le palier (STG) et, en tant qu'unité, la source (ELS) du faisceau d'examen d'échantillon et du détecteur de données (DDET) ; et un dispositif de translation de la position relative de l'échantillon (SAM) relativement à la source du faisceau d'examen de l'échantillon et au détecteur de données (DDET), le long de deux axes orthogonaux, et un dispositif d'ajustage de l'orientation relative du système d'examen (ELS) relativement à l'échantillon, pour régler l'angle et le plan d'incidence du faisceau d'examen de l'échantillon relativement à la surface dudit échantillon (SAM) ;
   de sorte qu'en cours d'usage le faisceau d'examen d'échantillon provenant de la source (ELS) s'approche de l'échantillon (SAM) à un angle d'incidence oblique, et est reflété par l'échantillon sur ledit détecteur de données (DDET) ;
   la méthode comprenant :

   le montage fonctionnel d'un système d'alignement de l'échantillon (AS) avec ledit système d'examen d'échantillon (ES), le système d'alignement de l'échantillon (AS) comprenant une source d'alignement (ALS) d'un faisceau d'alignement du rayonnement électromagnétique ; un premier dispositif de focalisation du faisceau d'alignement (CLA1) pour la mise au point du faisceau d'alignement de ladite source (ALS) avec l'échantillon (SAM) sur le palier (STG) ; un deuxième dispositif de focalisation de l'alignement (CLA2) pour la mise au point du rayonnement électromagnétique du faisceau d'alignement reflété par l'échantillon (SAM) ; et une matrice de détection bidimensionnelle (SCRN1) ;

de sorte qu'en cours d'usage le faisceau d'alignement provenant de la source d'alignement (ALS) soit focalisé sur l'échantillon (SAM) à un angle d'incidence oblique, soit reflété par celui-ci, et soit focalisé seulement sur la matrice de détection bidimensionnelle (SCRN1) ;

Le système d'examen d'échantillon (ES) et le système d'alignement (AS) étant montés l'un relativement à l'autre de sorte que le faisceau d'examen d'échantillon et le faisceau d'alignement frappent l'échantillon (SAM) en un point substantiellement identique ;

ladite méthode comportant en outre :

au cours du contrôle de l'intensité de sortie du détecteur de données (DDET), la détermination de l'approche, par un faisceau d'examen d'échantillon provenant de la source (ELS), de l'échantillon (SAM) avec un angle d'incidence oblique, et sa réflexion dans ledit détecteur de données (DDET), l'ajustage du dispositif de réglage du positionnement de la « hauteur » relative jusqu'à ce que la sortie dudit détecteur de données (DDET) présente l'intensité désirée ; et

l'approche par le faisceau d'alignement provenant de la source (ALS) sur l'échantillon (SAM) à un angle d'incidence oblique, et sa réflexion par ce dernier sur la matrice de détection bidimensionnelle (SCRN1), et l'identification de l'emplacement sur la matrice de détection bidimensionnelle (SCRN1) comme étant une position alignée;

cette méthode comportant en outre :

l'utilisation d'un dispositif de translation de la position relative de l'échantillon (SAM) de façon à causer la translation relative de l'échantillon (SAM) le long d'au moins un axe orthogonal, afin qu'un nouveau point sur l'échantillon (SAM) soit examiné par le faisceau d'examen de l'échantillon, et de sorte que l'emplacement auquel le faisceau d'alignement est reflété par la surface de l'échantillon (SAM) apparaisse sur la matrice de détection bidimensionnelle (SCRN1) en un lieu différent de celui de la position alignée ;

l'ajustage du dispositif de réglage du positionnement relatif en « hauteur » jusqu'à ce que le faisceau d'alignement reflété par la surface dudit échantillon (SAM) apparaisse sur la matrice de détection bidimensionnelle (SCRN1) dans une position alignée ;

le réglage ci-dessus étant effectué, la saisie de données du détecteur de données (DDET), et

la répétition des opérations de translation relative de l'échantillon (SAM), en ajustant le positionnement relatif en « hauteur » jusqu'à ce que le faisceau d'alignement se trouve dans la position alignée ; et la saisie de données dudit détecteur de données (DDET) ;

la méthode étant **caractérisée par le fait que** le système d'alignement de l'échantillon (AS) comprend un séparateur de faisceau (BS) situé entre le deuxième dispositif de focalisation de l'alignement (CLA2) et la matrice de détection bidimensionnelle (SCRN1), et une matrice de détection bidimensionnelle secondaire (SCRN2), le séparateur de faisceau (BS) déviant une partie du faisceau d'alignement qui se reflète de l'échantillon (SAM) sur la matrice de détection bidimensionnelle secondaire (SCRN2) ;

et **par le fait que** la méthode comporte également :

tout en déterminant l'incidence du faisceau d'examen d'échantillon provenant de la source (ELS) sur l'échantillon à un angle oblique, et sa réflexion dans le détecteur de données (DDET), l'exécution du contrôle de la sortie du détecteur de données (DDET), et l'ajustage du dispositif de réglage de l'orientation relative du système d'examen d'échantillon (ES) relativement audit échantillon (SAM) pour procéder à la rotation du système d'examen d'échantillon afin de régler l'angle et le plan d'incidence du faisceau du système d'examen d'échantillon (ES) sur la surface de l'échantillon (SAM) jusqu'à la maximisation de l'intensité de la sortie du détecteur de données (DDET), et de sorte que le faisceau d'alignement soit reflété par l'échantillon (SAM) et, à travers le séparateur de faisceau (BS), apparaisse sur la matrice de détection bidimensionnelle secondaire (SCRN2), et l'identification de l'emplacement de ladite matrice de détection bidimensionnelle secondaire (SCRN2) en tant que position alignée ;

après le déplacement du système d'examen d'échantillon le long d'au moins un axe orthogonal de sorte qu'un nouveau point sur l'échantillon (SAM) soit examiné, l'ajustage de la position du système d'examen d'échantillon pour le réglage de l'angle et du plan d'incidence dudit faisceau relativement à une surface dudit échantillon (SAM) jusqu'à ce que le faisceau d'alignement reflété par la surface de l'échantillon (SAM) apparaisse sur la matrice de détection bidimensionnelle (SCRN2) à ladite position alignée.

2. Une méthode selon la revendication 1, dans laquelle la source (ELS) d'un faisceau de rayonnement électromagnétique est une source spectroscopique.

3. Une méthode selon la revendication 1, comportant en outre l'analyse de données saisies dans le détecteur de données (DDET).

4. Une méthode selon la revendication 3, dans laquelle la saisie de données comporte la répétition à au moins deux reprises des opérations, pour obtenir des données d'au moins deux points sur l'échantillon (SAM), et dans laquelle l'analyse comprend une régression simultanée sur des données obtenues d'au moins deux points sur l'échantillon (SAM).

5. Une méthode selon la revendication 1, comportant également l'opération de calibrage du système, en évaluant des paramètres dans un modèle mathématique du système, en appliquant une procédure de régression sur données obtenues dudit détecteur de données (DDET), tout en examinant au moins un échantillon standard, présentant des propriétés physiques et/ou optiques connues.

6. Une méthode selon la revendication 1, dans laquelle le système d'examen d'échantillon (ES) comprend un polariseur (P) placé entre la source (ELS) du faisceau d'examen d'échantillon et l'échantillon (SAM), et un analyseur (A) entre l'échantillon (SAM) et le détecteur de données (DDET), et dans lequel le système est un ellipsomètre ou un polarimètre.

7. Un système mixte d'examen de l'échantillon (ES) mixte et d'alignement (AS) comprenant un système d'examen d'échantillon sélectionné dans le groupe composé d'un ellipsomètre, d'un polarimètre, d'un réflectomètre, d'un spectrophotomètre, et d'un système de mesure Mueller Matrix ;

le système d'examen d'échantillon comprenant une source (ELS) d'un faisceau d'examen d'échantillon à rayonnement électromagnétique ; un palier (STG) supportant un échantillon (SAM) ; un détecteur de données (DDET) ; un dispositif pour ajuster le positionnement à « hauteur » (H) relative entre le palier (STG) et, en tant qu'unité, la source (ELS) du faisceau d'examen d'échantillon et du détecteur de données (DDET) ; et un dispositif de translation de la position relative de l'échantillon (SAM) relativement à la source (ELS) du faisceau d'examen de l'échantillon et du détecteur de données (DDET), le long de deux axes orthogonaux, et un dispositif d'ajustage de l'orientation du système d'examen (ES) relativement à l'échantillon (SAM), pour régler l'angle et le plan d'incidence du faisceau d'examen de l'échantillon relativement à la surface dudit échantillon (SAM) ;

de sorte qu'en cours d'usage le faisceau d'examen d'échantillon provenant de la source (ELS) s'approche de l'échantillon (SAM) à un angle d'incidence oblique, et est reflété par l'échantillon sur ledit détecteur de données (DDET) ; et

un système d'alignement (AS) comprenant une source d'alignement (ALS) d'un faisceau d'alignement du rayonnement électromagnétique ; un premier dispositif de focalisation du faisceau d'alignement (CLA1) pour la focalisation du faisceau d'alignement de ladite source (ALS) avec l'échantillon (SAM) sur le palier (STG) ; un deuxième dispositif de focalisation de l'alignement (CLA2) pour la focalisation du rayonnement électromagnétique du faisceau d'alignement reflété par l'échantillon ; et une matrice de détection bidimensionnelle (SCRN1) ;

de sorte qu'en cours d'usage le faisceau d'alignement provenant de la source d'alignement (ALS) soit focalisé sur l'échantillon (SAM) à un angle d'incidence oblique, soit reflété par celui-ci, et soit focalisé seulement sur la matrice de détection bidimensionnelle (SCRN1) ;

Le système d'examen d'échantillon (ES) et le système d'alignement (AS) étant montés l'un relativement à l'autre de sorte que le faisceau d'examen d'échantillon et le faisceau d'alignement frappent l'échantillon (SAM) en un point substantiellement identique ;

dans lequel ledit système d'alignement de l'échantillon (AS) comprend également un séparateur de faisceau (BS) situé entre le deuxième dispositif de focalisation de l'alignement (CLA2) et la matrice de détection bidimensionnelle (SCRN1), et une matrice de détection bidimensionnelle secondaire (SCRN2), le séparateur de faisceau (BS) déviant une partie du faisceau d'alignement qui se reflète de l'échantillon (SAM) sur la matrice de détection bidimensionnelle secondaire (SCRN2).

8. Un système mixte d'examen d'échantillon (ES) et d'alignement (AS), selon la revendication 7, le système comprenant également :

   un cadre de montage (MF) supportant ledit système d'examen d'échantillon (ES), et un système d'alignement (AS), ledit cadre de montage (MF) se projetant verticalement vers le haut d'un support orienté horizontalement, vu en élévation, dans lequel le système mixte d'examen d'échantillon (ES) peut être déplacé horizontalement et verticalement par rapport au cadre de montage (MF) le long de deux axes orthogonaux, et peut être également déplacé dans une troisième direction pour ajuster la « hauteur » entre le palier (STG) et le système mixte d'examen d'échantillon (ES) afin de régler l'angle et le plan d'incidence du faisceau relativement à la surface de l'échantillon (SAM), qui est monté dans un emplacement fixe.

9. Un système mixte d'examen d'échantillon (ES) et d'alignement (AS), selon la revendication 8, dans lequel le palier (STG) supportant l'échantillon (SAM) est orienté de façon à fixer l'échantillon (SAM) dans un plan légèrement décalé par rapport au plan projeté verticalement vers le haut du cadre de montage (MF), de sorte que l'échantillon (SAM) entré dans celui-ci n'ait pas tendance à en retomber, le palier (STG) étant réalisé de façon à n'entrer en contact qu'avec les bords de l'échantillon (SAM).

FIG. 1

FIG. 2a

FIG. 2b

SCREN 1

SCREN 2

ALS

AS

TTA

AB

HA

M

BS

CLA1

CLA2

**FIG 3a**

H

POI

AOI

SAM/ST

**FIG. 3b**

SAM

H

STG

I

H

HA

**FIG. 3c**

TTA

AOI

POI

I

**FIG. 3d**

FIG. 4a

FIG. 4b

**FIG. 4c**

FIG. 4e

FIG. 4d

FIG. 4f

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 89039107 A
- US 11105852 B
- WO 60564747 A
- US 7084978 B1
- US 5764365 A, Finarov
- US 5343293 A, Berger
- US 4672196 A, Canino
- US 4647207 A, Bjork
- US 6081334 A, Grimbergen
- US 5410409 A, Ray
- US 3874797 A, Kasai

- US 5412473 A, Rosencwaig
- US 5581350 A, Chen
- US RE40225 E, Finarov
- US RE38153 E, Finarov
- US 6678043 B, Vurens
- US 7099010 B, schulz
- US 7295330 B, Chow
- US 7327444 B, Naka
- WO 5872630 A, Johs
- US 11784750 B

### Non-patent literature cited in the description

- **JOHS.** Regression Calibration Method For Rotating Element Ellipsometers. *Thin Film Solids,* 1993, vol. 234